# EUROPEAN PATENT SPECIFICATION

(11) **EP 1 023 977 B1**
(45) Date of publication and mention of the grant of the patent: **28.09.2005**
(21) Application number: 99200258.4
(22) Date of filing: 28.01.1999
(51) Int. Cl.: B27N 1/00, C02F 3/28

(54) **Process for preparing cellulosic fibrous aggregates**
Verfahren zur Herstellung von Zellulosefaseraggregaten
Procédé de préparation des aggrégats de fibres cellulosiques

(43) Date of publication of application: 02.08.2000
(73) Proprietor: Plato International Technology B.V., 6827 AV Arnhem (NL)
(72) Inventor: Groeneveld, Hendrik Adriaan Cornelis, 3455 SM Haarzuilens (NL); Belle, Jeroen Frederik Arthur, 6953 BZ Dieren (NL); Maasen, Wilhelmus Antonius Hendrikus, 6921 KL Duiven (NL)
(74) Representative: Volmer, Johannes Cornelis

(56) References cited:
- EP-A- 0 133 846
- EP-A- 0 373 726
- EP-A- 0 852 174
- US-A- 4 022 665
- US-A- 4 461 708
- US-A- 5 670 047

## Description

The invention relates to a process for the preparation of cellulosic fibrous aggregates.

Within living memory, wood has played an essential role in human society, widely used in manufacturing moulded goods, such as tools and furniture and for building and construction purposes.

Also, wood has become of much interest in the processing industry where it is applied, usually in divided form, as a base material for, inter alia, the paper and building industry. This provides an advantageous opportunity to utilize low-quality wood, unsuitable pieces left over from the woodwork and timber-industry and the like.

In many of these applications, woodpulp, sawdust, small-size cuttings or larger sections of wood, are subjected to a chemical treatment such as extraction with diluted acids or a conversion with the aid of steam under superatmospheric pressure.

Typically, these wood-processing applications are performed in large-scale operation and they involve the use of considerable amounts of aqueous process streams. Desirably, such aqueous streams should be recycled, but in most cases, at some stage, they have to be removed from the process.

One of the reasons that recycling can not always be considered is that the said aqueous process streams are usually contaminated with all sorts of impurities which by recycling would build up and interfere with the operability of the process.

On the other hand, direct disposal of the aqueous, contaminated process streams is not possible either, mainly for environmental reasons.

Hence it will be necessary to purify the contaminated process streams which suitably may then be recycled to the process at issue.

Various methods for the removal of contaminating compounds from aqueous streams are known in the art. However, since usually the contaminants have to be removed from large amounts of diluted streams, most of the known purification processes are technically difficult or have to be turned down already for economic reasons.

A known method which has been considered for purifying contaminated, diluted process streams, consists in the bacterial digestion of contaminants by aerobic or anaerobic treatment of the process streams with selected bacterial digesters. Conventional examples of suitable feedstocks for this digestion process include municipal sewage streams, animal farm waste streams and domestic garbage. Usually, these feedstocks comprise various organic and inorganic solid components which may be removed by filtration and soluble organic substances such as hydrocarbons, alcohols, acids, esters, carbohydrates, sugars, fats and aminoacids.

The digestion of these aqueous solutions results in the formation of gaseous products, mainly methane and carbondioxide and a liquid effluent, with a reduced impurity content.

However, further investigation has shown that the contaminants normally occurring in the aqueous streams of wood-processing plants, inhibit the formation of methane (methanogenesis) by bacterial digestion of the contaminants and in some cases are poisonous for the bacterial culture selected. Such inhibiting contaminants are, for example, lignins and derivatives and components thereof, various constituents of wood resins, long chain fatty acids, phenols, volatile terpenes and the like. In this connection reference is made to "Anaerobic Digestion" by P.N.Hobson and A.D.Wheatley, Elsevier Science Publishers Ltd, 1993, p.59 and 61. Since moreover wood-processing waste streams often contain sulphur compounds which may be converted to hydrogensulphide acting as a poison for the anaerobic bacteria normally used, it would appear that purification with the aid of bacterial digestion of the contaminated process streams occurring in wood-processing plants would not be a feasible method.

However, surprisingly it has now been found that in a process for the preparation of cellulosic fibrous aggregates, such as described in European Patent EP 373,726, anaerobic purification of aqueous process streams is a very advantageous method, allowing the purified aqueous stream to be recycled to the wood-processing plant.

The invention may be defined as relating to a process for the preparation of a cellulosic fibrous aggregate, comprising a softening stage and a curing stage, whereby in the softening stage a section of cellulosic fibrous material is exposed to the action of a liquid aqueous softening agent at elevated temperature and at a pressure of at least the equilibrium vapour pressure of the softening agent at the operating temperature, in which at least part of an aqueous stream, contaminated with organic material, obtained as effluent stream from the zone wherein the softening has been effected, is subjected to an anaerobic purification treatment and at least part of the resulting purified aqueous stream is recycled to the softening stage.

The starting material in the process according to the invention is indicated as "a section of cellulosic fibrous material". This term in particular refers to a portion of cellulosic fibrous material having a length of at least 20 cm and a cross-section with a dimension of at least 5 mm.

Such material is distinct from pulp, powder, shavings or chips and for the process at issue pieces with the indicated dimensions are preferred starting materials.

Suitable sections of cellulosic fibrous material may originate of any material comprising hemicellulose and elongate fibres of cellulose. They include sections provided by trees, branches and residual matter from planks, beams or other cuttings. The sections may consist of hard wood, soft wood or freshly harvested sapwood resulting from the most recent growth of the tree. Cuttings normally disposed of as waste are likewise suitable starting materials. For further specific examples of suitable cellulosic fibrous materials reference is made to the disclosures of EP-A-373726.

The softening agent to which the sections are exposed may be present as water or as steam. It is preferred to use a liquid aqueous softening agent, because this facilitates the cooling of the product and hence is advantageous for the general operability of the process and product quality. The softening stage in the process of the invention, also indicated as hydrothermolysis, is preferably carried out at a temperature in the range of 150-220°C, most preferably in the range of 160-220°C.

In recommended embodiments of the process, the softening stage is followed by a dewatering stage. This achieves a considerable reduction of the moisture content of the product from the softening zone. A high moisture content of the product which has to be supplied to the zone wherein the curing is effected, should be avoided, because of possible defects that may develop during the curing stage such as cracks and partial collapses in the aggregate structure.

In the curing stage as applied in the process of the invention, the product of the softening stage, preferably after a subsequent dewatering stage, is further dried, typically to a moisture content of well below 5%, preferably below 1%, on dry wood basis.

For further details concerning suitable process conditions prevailing during the softening stage, the dewatering stage, if included and the curing stage, reference is made to the disclosures of EP-A-373,726 and EP-A-852,174.

The aqueous stream, withdrawn from the zone wherein the softening has been effected, generally contains relatively small amounts of dissolved organic compounds and in addition minor amounts of inorganic compounds and some dispersed solid and liquid material. The aqueous effluents obtained in the dewatering stage, if included, and in the curing stage, do not differ greatly in composition from the effluent from the softening stage, although they are usually much smaller in volume. Preferably these effluents are likewise subjected to the anaerobic purification treatment and more preferably they are combined with the effluent from the softening stage, before being supplied to the purification zone.

According to a preferred embodiment of the process of the invention, the temperature of the effluent stream from the zone wherein the softening is effected, is reduced in a heat-exchange contact, before being subjected to the purification treatment.

In particular preferred is a process embodiment in which the process is performed in two reactors, operated in phases, such that the heat-exchange contact is between a liquid aqueous stream to be used as softening agent in a softening step effected in the first reaction zone, and a liquid stream contaminated with organic material, obtained as effluent in a softening step that has been effected in the second reaction zone. For further particulars relating to the conditions suitable for this embodiment, reference is made to the disclosures of EP-A-852,174.

In the aforesaid heat-exchange contact heat is typically transferred from one stream to the other via an intermediate wall, separating the two liquid streams. However, in addition or alternatively, heat can also advantageously be transferred by direct mixing of the liquid streams, followed by injection of steam in one of the streams, if a further increase in temperature of that stream is desired.

Since the content of organic material in the effluent stream, recycled to the softening stage, has been reduced during the anaerobic purification treatment, fouling and foaming which otherwise might have interfered with the operability of the process, are largely or entirely prevented.

Whilst by using one of the aforesaid preferred embodiments of the process, the temperature of the effluent stream from the softening stage is considerably reduced, some further cooling may be necessary, before supplying the said stream or part thereof to the purification zone.

Typically, the contaminated aqueous streams to be purified contain dissolved organic compounds, dispersed organic material and some solid, usually fibrous components.

Preferably, the solid material and at least part of the dispersed organic material is removed from the effluent, e.g. by filtration or adsorption techniques, before the aqueous stream is supplied to the purification zone.

The amounts of dissolved organic compounds, in the present application, are expressed as the amount of oxygen, required for total conversion of the organic compounds (chemical oxygen consumption (C.O.C.)). Typical amounts of organic compounds in the effluent streams are up to 35, in particular of 20-30 g (C.O.C.) per litre.

During the anaerobic purification the decomposible organic substances are, at least partly, converted to biogas, a mixture of methane and carbondioxide.

Specifically, during the anaerobic purification a substantial decomposition of acid compounds, such as acetic acid, is achieved. Since, consequently, by recycling the purified process stream no build-up of such acid compounds takes place, an important advantage of the present process is that the pH control of the liquid aqueous stream used in the softening stage, is considerably facilitated and, if carried out at all, requires only minor amounts of neutralizing agents.

The anaerobic digestion method used in the process of the invention, is also advantageous in that relatively small amounts of biomass (sludge) are formed. Amounts of formed biomass are conveniently expressed as amounts of oxygen required for total biochemical conversion of the biomass (biochemical conversion (B.O.C.)).

Typical amounts of biomass formed during the anaerobic digestion are in the range of 0.05-0.3, in particular in the range of 0.1-0.2 g per g (B.O.C.).

It has been observed that a high purification efficiency is achieved, whereby at least 80% and often 90% or more of the dissolved organic contaminants are converted.

It has proved to be feasible to recycle most of the effluent from the anaerobic purification zone directly to the softening stage in the process and to dispose of the remaining part of the said effluent.

In most instances, however, the purified effluent stream will still contain some organic material, e.g. in the range of 2-2.5 g (C.O.C.) per litre, preventing direct disposal thereof as waste. In these instances it is therefore preferred to include a further purification step, thus reducing the amount of organic material to less than 150 mg (C.O.C.) per litre.

Such an additional purification step may suitably consist in an aerobic digestion, since the chemical oxygen demand for converting the organic material in the effluent stream has already been considerably reduced during the anaerobic treatment.

The recycling of the purified effluent from the anaerobic purification stage and/or from any further purification stage, if installed, to the softening stage allows considerable savings to be made as regards the supply of make-up softening agent. Since the effluent thus purified, does no longer comprise unacceptably high amounts of non-degradable products that would build up and hence would interfere with the operability of the process for preparing aggregates, in principle full recycle of the purified effluent stream is possible. In practice, some increase in process liquid will occur, resulting from direct steam injection and hence a slipstream is usually included in the process set-up. Typically, at least 50% and preferably at least 75% of the effluent stream is recycled.

It has been established that the method comprising an anaerobic digestion step followed by recycling of purified effluent, as applied in the process according to the invention, can also be used in other processes involving hydrothermolysis of ligno-cellulosic material.

Specifically, upgrading natural ligno-cellulosic fibres such as flax, flax fibres or flax straw, by hydrothermolysis, drying and curing to form products which are less moisture-sensitive than the starting material, entails the occurrence of contaminated aqueous process streams. These streams may suitably be subjected to an anaerobic purification treatment, and at least part of the purified streams can be recycled to the hydrothermolysis step of the upgrading process.

As indicated above, during the anaerobic digestion treatment biogas is formed, being a mixture of methane, carbondioxide and minor amounts of other compounds such as hydrogen, water and hydrocarbons e.g. ethane.

Generally, the methane content in biogas is in the range of 50-80%, the remainder substantially being formed by carbondioxide.

In view of the high methane content, biogas is a valuable product which may be used for the production of synthesis gas, or for the production of energy. Preferably, the biogas is converted to thermal energy. Alternatively, the carbondioxide content of the biogas may first be reduced and the remaining methane-enriched gas may be supplied to a gas engine for the production of electric energy. The invention is further illustrated with the following example.

### Example

An autoclave reactor was loaded with Scots pinewood having a moisture content of 15-20% on dry wood basis. The reactor was closed and subsequently aqueous liquid was circulated with the aid of a pump. At least part of the circulating liquid passed a heat-exchanger, absorbing heat from a liquid stream, obtained from the softening stage effected in a second autoclave reactor.

The treated wood was transferred to a drying unit and the dried wood to a curing furnace. The moisture content of the wood was less than 1% on dry wood basis.

The specific amounts and conditions in the present example were similar to those disclosed in the Example of EP-A-852,174 and by way of reference these disclosures are included in the present application.

From the liquid aqueous stream circulating through the autoclave reactor, a slipstream was removed in an amount of 84% by weight, based on the amount of wood in the first reactor. In addition, slipstreams were removed from the drying unit in an amount of 43% and from the curing furnace in an amount of 17.5%, again based on the weight amount of wood.

The slipstreams were combined, cooled down to a temperature of 37°C and fed into a continuous-flow stirred tank containing an anaerobic digester. The used tank was of a commercially available type, i.e. a USAB reactor.

The amount of organic material in the feed to the anaerobic digestion reactor was 2.4%. From the anaerobic purification unit a liquid effluent containing 0.2% organic material and a gasstream containing 1.1% methane and 50% (by volume) of carbondioxide were withdrawn. These amounts were determined on a C.O.C. (chemical oxygen consumption) g per g basis.

The major part of the purified liquid effluent obtained in the anaerobic purification zone, i.e. 85%, was recycled to the autoclave reactor in which the softening stage was effected. The remaining part of the purified liquid effluent was transferred to an aerobic purification unit in which the amount of organic material was further reduced.

In fact, the liquid effluent from this purification zone contained only 0.016% of organic material.

In addition, a sludge stream was withdrawn from the aerobic digestion unit in an amount of 0.048%.

## Claims

1. A process for the preparation of a cellulosic fibrous aggregate, comprising a softening stage and a curing stage, whereby in the softening stage a section of cellulosic fibrous material is exposed to the action of a liquid aqueous softening agent at elevated temperature and at a pressure of at least the equilibrium vapour pressure of the softening agent at the operating temperature, in which at least part of an aqueous stream, contaminated with organic material, obtained as effluent stream from the zone wherein the softening has been effected, is subjected to an anaerobic purification treatment and at least part of the resulting purified aqueous stream is recycled to the softening stage.

2. A process as claimed in claim 1, **characterized in that** the process further comprises a dewatering stage in between the softening stage and the curing stage.

3. A process as claimed in claim 1 or 2, **characterized in that** in addition to the effluent stream from the softening stage, at least part of an aqueous stream, contaminated with organic material, obtained as effluent stream from the curing and/or dewatering stage, is subjected to the anaerobic purification treatment.

4. A process as claimed in any of claims 1-3, **characterized in that** the temperature of the effluent stream from the zone wherein the softening has been effected, has been reduced in a heat-exchange contact, before subjecting the said stream to the purification treatment.

5. A process as claimed in any of claims 1-4, **characterized in that** the temperature of the effluent stream from the zone wherein the softening has been effected, has been reduced by direct mixing the said effluent stream with a liquid stream having a lower temperature and substantially consisting of recycled purified aqueous liquid.

6. A process as claimed in claim 4 or 5, **characterized in that** the process is performed in two reactors, operated in phases, such that the heat-exchange contact is between a liquid aqueous stream to be used as softening agent in a softening step effected in the first reaction zone, and a liquid stream contaminated with organic material, obtained as effluent in a softening step that has been effected in the second reaction zone.

7. A process as claimed in claim 4 or 5, **characterized in that** the process is performed in two reactors, operated in phases, such that transfer of heat is effected by direct mixing a liquid aqueous stream to be used as softening agent in a softening step effected in the first reaction zone, and a liquid stream contaminated with organic material, obtained as effluent in a softening step that has been effected in the second reaction zone.

8. A process as claimed in any of claims 1-7, **characterized in that** part of the liquid effluent obtained in the anaerobic purification treatment is subjected to an aerobic purification treatment.

9. A process as claimed in any of claims 1-8, **characterized in that** at least 50% by volume of the purified liquid stream is recycled to the softening stage.

10. A process as claimed in claim 9, **characterized in that** at least 75% by volume of the said purified stream is recycled.

11. A process as claimed in any of claims 1-10, **characterized in that** at least part of the gaseous effluent, obtained in the anaerobic purification treatment, is used for the generation of thermal and/or electric energy.

12. A process as claimed in any of claims 1-11, **characterized in that** the operating temperature of the softening stage is in the range of 150 to 220°C.

13. A process as claimed in any of claims 1-12, **characterized in that** the operating temperature of the curing stage is in the range of 100 to 220°C.

## Patentansprüche

1. Verfahren zur Herstellung eines cellulosehaltigen faserförmigen Aggregats, welches eine Erweichungsstufe und eine Härtungsstufe umfasst, wobei in der Erweichungsstufe ein Bereich eines cellulosehaltigen faserförmigen Materials der Wirkung eines flüssigen wässrigen Weichmachers bei erhöhter Temperatur und bei einem Druck von mindestens dem Gleichgewichtsdampfdruck des Weichmachers bei der Verfahrenstemperatur ausgesetzt wird, wobei mindestens ein Teil eines mit organischem Material kontaminierten wässrigen Stroms, erhalten als Ausflussstrom aus der Zone, in der das Erweichen bewirkt worden ist, einer anaeroben Reinigungsbehandlung unterworfen wird und mindestens ein Teil des erhaltenen gereinigten wässrigen Stroms in die Erweichungsstufe zurückgeführt wird.

2. Verfahren nach Anspruch 1, **dadurch gekennzeichnet, dass** das Verfahren außerdem zwischen der Erweichungsstufe und der Härtungsstufe eine Entwässerungsstufe umfasst.

3. Verfahren nach Anspruch 1 oder 2, **dadurch gekennzeichnet, dass** zusätzlich zu dem Ausflussstrom aus der Erweichungsstufe mindestens ein Teil des mit organischem Material kontaminierten wässrigen Stroms, erhalten als Ausflussstrom aus der Härtungs- und/oder Entwässerungsstufe, einer anaeroben Reinigungsbehandlung unterworfen wird.

4. Verfahren nach einem der Ansprüche 1 bis 3, **dadurch gekennzeichnet, dass** die Temperatur des Ausflussstroms aus der Zone, in der das Erweichen bewirkt worden ist, durch Wärmeaustausch gesenkt worden ist, bevor der Strom der Reinigungsbehandlung unterworfen wird.

5. Verfahren nach einem der Ansprüche 1 bis 4, **dadurch gekennzeichnet, dass** die Temperatur des Ausflussstroms aus der Zone, in der die Erweichung bewirkt worden ist, durch direktes Mischen des Ausflussstroms mit einem flüssigen Strom bewirkt worden ist, der eine geringere Temperatur hat und im wesentlichen aus zurückgeführter gereinigter, wässriger Flüssigkeit besteht.

6. Verfahren nach Anspruch 4 oder 5, **dadurch gekennzeichnet, dass** das Verfahren in zwei Reaktoren durchgeführt wird, die in Phase betrieben werden, so dass der Wärmeaustausch zwischen einem flüssigen wässrigen Strom, der in einer in der ersten Reaktionszone bewirkten Erweichungsstufe als Weichmacher eingesetzt werden soll, und einem mit einem organischen Material kontaminierten flüssigen Strom, erhalten als Ausfluß in einer in der zweiten Reaktionszone bewirkten Erweichungsstufe, stattfindet.

7. Verfahren nach Anspruch 4 oder 5, **dadurch gekennzeichnet, dass** das Verfahren in zwei Reaktoren durchgeführt wird, die in Phase betrieben werden, so dass die Wärmeübertragung durch direktes Mischen eines flüssigen wässrigen Stroms, der in einer in der ersten Reaktionszone bewirkten Erweichungsstufe als Weichmacher eingesetzt werden soll, mit einem mit organischem Material kontaminierten flüssigen Strom, erhalten als Ausfluß in einer in der zweiten Reaktionszone bewirkten Erweichungsstufe, bewirkt wird.

8. Verfahren nach einem der Ansprüche 1 bis 7, **dadurch gekennzeichnet, dass** ein Teil des in der anaeroben Reinigungsbehandlung erhaltenen flüssigen Ausflusses einer aeroben Reinigungsbehandlung unterworfen wird.

9. Verfahren nach einem der Ansprüche 1 bis 8, **dadurch gekennzeichnet, dass** mindestens 50 Vol.-% des gereinigten flüssigen Stroms in die Erweichungsstufe zurückgeführt werden.

10. Verfahren nach einem der Ansprüche 1 bis 10, **dadurch gekennzeichnet, dass** mindestens 75 Vol.-% des gereinigten Stroms zurückgeführt werden.

11. Verfahren nach einem der Ansprüche 1 bis 10, **dadurch gekennzeichnet, dass** mindestens ein Teil des in der anaeroben Reinigungsbehandlung erhaltenen gasförmigen Ausflusses für die Erzeugung von thermischer und/oder elektrischer Energie genutzt wird.

12. Verfahren nach einem der Ansprüche 1 bis 11, **dadurch gekennzeichnet, dass** die Verfahrenstemperatur der Erweichungsstufe im Bereich von 150 bis 220 °C ist.

13. Verfahren nach einem der Ansprüche 1 bis 12, **dadurch gekennzeichnet, dass** die Verfahrenstemperatur der Härtungsstufe im Bereich von 100 bis 220 °C ist.

## Revendications

1. Un procédé de préparation d'un agrégat fibreux cellulosique, comprenant une étape de ramollissement et une étape de durcissement, dans lequel, dans l'étape de ramollissement, on expose une section de matière fibreuse cellulosique à l'action d'un agent ramollissant aqueux liquide, à température élevée et à une pression d'au moins la pression de vapeur à l'équilibre de l'agent ramollissant à la température opératoire, procédé dans lequel au moins une partie du courant aqueux, contaminé par les substances organiques, obtenu comme courant effluent de la zone où a été effectué le ramollissement, est soumise à un traitement de purification anaérobie et au moins une partie du courant aqueux purifié résultant est recyclée à l'étape de ramollissement.

2. Un procédé selon la revendication 1, **caractérisé en ce que** le procédé comprend en outre une étape d'élimination d'eau intercalée entre l'étape de ramollissement ou l'étape de durcissement.

3. Un procédé selon l'une quelconque des revendications 1 ou 2, **caractérisé en ce que** outre le courant d'effluent issu du stade de ramollissement, au moins une partie du courant aqueux, contaminé par des matières organiques, obtenu en tant que courant effluent de l'étape de durcissement et/ou d'élimination d'eau est soumise au traitement de purification anaérobie.

4. Un procédé selon l'une quelconque des revendications 1 à 3, **caractérisé en ce que** la température du courant effluent provenant de la zone où on a effectué le ramollissement a été abaissée par contact dans un échangeur thermique, avant que ledit courant soit soumis au traitement de purification.

5. Un procédé selon l'une quelconque des revendications 1 à 4, **caractérisé en ce que** la température du courant effluent provenant de la zone où on a effectué le ramollissement a été abaissée par mélange direct dudit courant effluent avec un courant liquide ayant une température plus basse et consistant sensiblement en liquide aqueux purifié recyclé.

6. Un procédé selon l'une quelconque des revendications 4 ou 5, **caractérisé en ce que** l'on met en oeuvre le procédé dans deux réacteurs, fonctionnant en alternance, de façon que le contact d'échange thermique se fasse entre un courant aqueux liquide utilisé en tant qu'agent de ramollissement dans l'étape de ramollissement effectuée dans la première zone réactionnelle et un courant liquide contaminé par des matières organiques, obtenu comme effluent dans une étape de ramollissement qui a été effectuée dans la seconde zone de réaction.

7. Un procédé selon l'une quelconque des revendications 4 ou 5, **caractérisé en ce qu'**on met en oeuvre le procédé dans deux réacteurs, fonctionnant en alternance, de sorte que le transfert thermique s'effectue par mélange direct du courant aqueux liquide servant en tant qu'agent de ramollissement dans l'étape de ramollissement effectuée dans la première zone de réaction, et un courant liquide contaminé par des substances organiques, obtenu comme effluent, dans une étape de ramollissement effectuée dans la seconde zone de réaction.

8. Un procédé selon l'une quelconque des revendications 1 à 7, **caractérisé en ce qu'**une partie de l'effluent liquide obtenu dans le traitement de purification anaérobie est soumise à un traitement de purification aérobie.

9. Un procédé selon l'une quelconque des revendications 1 à 8, **caractérisé en ce qu'**au moins 50 % en volume du courant liquide purifié est recyclé dans l'étape de ramollissement.

10. Un procédé selon la revendication 9, **caractérisé en ce qu'**au moins 75 % en volume dudit courant purifié est recyclé.

11. Un procédé selon l'une quelconque des revendications 1 à 10, **caractérisé en ce qu'**au moins une partie d'effluent gazeux, obtenu dans le traitement de purification anaérobie, sert pour la génération d'énergie thermique et/ou électrique.

12. Un procédé selon l'une quelconque des revendications 1 à 11, **caractérisé en ce que** la température opératoire de l'étape de ramollissement est dans la fourchette de 150 à 220 °C.

13. Un procédé selon l'une quelconque des revendications 1 à 12, **caractérisé en ce que** la température opératoire de l'étape de durcissement se situe dans la fourchette de 100 à 220 °C.
